# EUROPÄISCHE PATENTSCHRIFT

(11) **EP 2 898 675 B1**
(45) Veröffentlichungstag und Bekanntmachung des Hinweises auf die Patenterteilung: **07.08.2019**
(21) Anmeldenummer: 13766926.3
(22) Anmeldetag: 16.09.2013
(51) Int. Cl.: H04N 7/18, G08B 13/196, G11B 27/34

(54) **BENUTZERSCHNITTSTELLENANORDNUNG SOWIE COMPUTERPROGRAMM**
USER INTERFACE ARRANGEMENT AND COMPUTER PROGRAM
DISPOSITIF D'INTERFACE UTILISATEUR AINSI QUE PROGRAMME D'ORDINATEUR

(30) Priorität: 24.09.2012 DE 102012217152
(43) Veröffentlichungstag der Anmeldung: 29.07.2015
(73) Patentinhaber: Robert Bosch GmbH, 70442 Stuttgart (DE)
(72) Erfinder: HEIGL, Stephan, 30173 Hannover (DE); GOTTSCHLAG, Daniel, 90419 Nuernberg (DE)
(86) Internationale Anmeldenummer: PCT/EP2013/069180
(87) Internationale Veröffentlichungsnummer: WO 2014/044643

(56) Entgegenhaltungen:
- WO-A1-2007/009238
- WO-A2-2006/074328

## Beschreibung

Die Erfindung betrifft eine Benutzerschnittstellenanordnung zum Anzeigen und/oder Abspielen von Videosequenzen. Die Videosequenzen zeigen jeweils ein Ereignis an und sind in einem Überwachungszeitraum aufgenommen. Die Benutzerschnittstellenanordnung weist eine Steuereinrichtung und einen Bildschirm auf, wobei die Steuereinrichtung den Bildschirm zur Ausgabe einer Anzeige ansteuert. Diese umfasst einen Zeitstrahl, der den Überwachungszeitraum oder einen Teil des Überwachungszeitraums angibt. Die Erfindung betrifft auch ein Computerprogramm für die Benutzerschnittstellenanordnung.

### Stand der Technik

Die Überwachung von öffentlichen Plätzen oder Räumen durch Videokameras ist heute weit verbreitet. Zur Sichtung der im Rahmen der Überwachung getätigten Videoaufzeichnungen werden häufig ein Bildschirm und eine Bedieneinrichtung verwendet. Üblicherweise werden die Videoaufzeichnungen auf dem Bildschirm wiedergegeben, wobei deren Wiedergabe durch die Bedienereinrichtung ansteuerbar ist. Bekannt ist, dass Symbole für die Videoaufzeichnungen in zeitlich gestaffelter Reihenfolge auf dem Bildschirm angezeigt und durch die Bedieneinrichtung anwählbar und ansteuerbar sind.

Beispielsweise offenbart die Druckschrift DE 10 2006 059 065 A1 eine Anzeige zur Darstellung eines Verlaufs eines Aufzeichnungsvorgangs, wobei die Anzeige Videodaten von Ereignissen, die bei dem Aufzeichnungsvorgang aufgezeichnet werden, in zeitlich gestaffelter Auflösung darstellt.

Die Druckschrift WO 2006/074328 A2 beschreibt ein Videoüberwachungssystem mit mindestens einer Kamera, die mit einem Steuersystem verbunden ist. In einem Such-/Playback Modus kann ein Nutzer aufgenommene Videosegmente suchen und wiedergeben. Hierfür umfasst das Videoüberwachungssystem eine Suchmaske mit einem Zeitstrahl, über die die Videosegmente zur Wiedergabe anwählbar sind.

Die Druckschrift Wo2007/009238 A1, die wohl den nächstliegenden Stand der Technik bildet, beschreibt ein Temporäres Datenvorschausystem zum Auswählen und Wiedergeben von Videodaten. Das Datenvorschausystem umfasst eine Benutzerschnittstelle zur Wiedergabe der Videodaten in Videosequenzen. Hierfür zeigt die Benutzerschnittstelle nach Aufnahmestartzeitpunkt sortierte Vorschaubilder der Videosequenzen an, die von einem Nutzer anwählbar und wiedergebbar sind.

### Offenbarung der Erfindung

Erfindungsgemäß wird eine Benutzerschnittstellenanordnung zum Anzeigen und/oder Abspielen von Videosequenzen mit den Merkmalen des Anspruchs 1 sowie ein Computerprogramm mit den Merkmalen des Anspruchs 13 vorgeschlagen. Vorteilhafte oder bevorzugte Ausführungsformen der Erfindung ergeben sich aus den Unteransprüchen, der nachfolgenden Beschreibung sowie den beigefügten Figuren. Die Videosequenzen sind vorzugsweise als zeitlich begrenzte Videoaufnahmen eines Ortes, insbesondere eines Überwachungsbereichs, im speziellen eines Platzes oder Raumes, ausgebildet. Möglich ist, dass sich die Videosequenzen in ihrer Dauer unterscheiden. Insbesondere weisen die Videosequenzen jeweils eine Aneinanderreihung von zeitlich aufeinanderfolgenden Bildern des Ortes auf.

Die Videosequenzen sind in einem Überwachungszeitraum, insbesondere Gesamtüberwachungszeitraum aufgenommen. Der Überwachungszeitraum, insbesondere Beginn, Dauer und Ende, ist frei durch einen Nutzer festlegbar. Zum Beispiel kann der Überwachungszeitraum einen Zeitraum von 24 Stunden oder eine Arbeitsschicht von acht Stunden umfassen. Vorzugsweise werden in dem Überwachungszeitraum mindestens eine Videosequenz, bevorzugt jedoch zwei oder mehrere Videosequenzen aufgenommen.

Jede Videosequenz zeigt jeweils mindestens ein tatsächliches oder potentielles Ereignis an. Das Ereignis kann zum Beispiel eine Existenz einer Person, eine Bewegung, eine verdächtige oder auffällige Handlung und/oder eine Veränderung einer Anzahl an Personen am videoüberwachten Ort umfassen. Die Aufnahme der Videosequenzen kann manuell gestartet und beendet werden, alternativ können die Kameras oder ein Überwachungssystem die Aufnahme und das Ende der Videosequenzen automatisiert steuern. Z.B. kann die Aufnahme der Videosequenz automatisiert erfolgen, wenn durch Bildverarbeitungsalgorithmen z.B. Bewegungen in dem Bild erkannt werden oder ein Suchobjekt, wie z.B. ein Gesicht erkannt wird. Alternativ können externe Aufnahmetrigger die Aufnahme der Videosequenzen steuern, wie z.B. ein an die Kamera oder das Überwachungssystem angeschlossenes Zugangskontrollsystem, wobei das Zugangskontrollsystem bei dem Zugang einer Person die Aufnahme einer Videosequenz steuert.

Die Benutzerschnittstellenanordnung weist eine Steuereinrichtung und einen Bildschirm auf. Die Steuereinrichtung ist dazu ausgebildet, den Bildschirm zur Ausgabe einer Anzeige anzusteuern. Die Anzeige umfasst einen Zeitstrahl, der den Überwachungszeitraum oder einen Teil des Überwachungszeitraums angibt, insbesondere optisch abbildet oder visualisiert. Beispielsweise umfasst der Zeitstrahl Angaben zum Jahr, Monat, Datum und/oder zur Uhrzeit des Beginns, der Aufnahme- oder Wiedergabezeit und/oder des Endes des Überwachungszeitraums oder des Teils des Überwachungszeitraums.

Erfindungsgemäß umfasst die Anzeige mindestens eine Markierung zur zeitlichen Einordnung und zur Angabe der Dauer der mindestens einen Videosequenz auf dem Zeitstrahl oder in Bezug auf den Zeitstrahl. Insbesondere ist die Markierung dazu ausgebildet, eine optische Information und/oder einen optischen Hinweis darüber zu geben, wann die mindestens eine Videosequenz im Überwachungszeitraum oder im Teil des Überwachungszeitraums aufgenommen wurde und wie lange diese dauert, insbesondere wann die Videosequenz beginnt und/oder endet.

Es ist von Vorteil, dass durch die Anzeige der mindestens einen Markierung für einen Nutzer auf einen Blick erkennbar ist, wann die Videosequenz im Überwachungszeitraum oder im Teil des Überwachungszeitraums aufgenommen wurde und wie lange diese dauert, bzw. wann diese beginnt oder endet. Durch die mindestens eine Markierung kann der Nutzer diese Information schnell und einfach erfassen. Weiterhin kann eine intuitive Ansteuerung der Anzeige durch den Nutzer gewährleistet werden.

In einer bevorzugten Ausgestaltung der Erfindung ist die mindestens eine Markierung als ein Balken oder eine Linie ausgebildet bzw. umfasst diese. Vorzugsweise ist die Länge der Markierung an die Dauer der mindestens einen Videosequenz angepasst. Insbesondere weist die Markierung eine umso größere Länge auf, je größer die Dauer der Videosequenz ist. Durch die Ausbildung der Markierung als Balken oder Linie ist die Markierung für den Nutzer leicht verständlich und selbsterklärend. Besonders bevorzugt entspricht die Länge der Markierung der Dauer der Videosequenz auf dem Zeitstrahl, so dass die Dauer der Videosequenz auf dem Zeitstrahl in einfacher Weise ablesbar oder abschätzbar ist.

In einer bevorzugten Ausführungsform umfasst die Anzeige mindestens ein Videosequenzsymbol - auch Videoereignissymbol zu nennen. Vorzugsweise weist das Videosequenzsymbol auf eine ihr zugeordnete, insbesondere dahinter geschaltete, Videosequenz bzw. auf ein Ereignis innerhalb der Videosequenz hin. Insbesondere ist das Videosequenzsymbol als ein gegenüber einem Gesamtbild des Bildschirms verkleinertes Standbild ausgebildet. Alternativ ist das Videosequenzsymbol als ein Ausschnitt aus dem Gesamtbild der den Bereich zeigt, ausgebildet, in dem das Ereignis stattgefunden hat (z.B. Ausschnitt nur des erkannten Gesichtes).

In einer bevorzugten Umsetzung der Erfindung wird das mindestens eine Videosequenzsymbol als mindestens ein Vorschaubild angezeigt. Alternativ wird das Videosequenzsymbol als ein Titel, eine Beschriftung und/oder als eine Nummerierung oder durch einen anderen geeigneten Hinweis angezeigt.

Bevorzugt ist, dass die mindestens eine Markierung einen vorzugsweise direkten und/oder unmittelbaren visuellen Bezug zwischen dem mindestens einen Videosequenzsymbol und dem Zeitstrahl herstellt. Durch die mindestens eine Markierung wird insbesondere auf einen Zeitpunkt des in der jeweiligen Videosequenz aufgenommenen Ereignisses auf dem Zeitstrahl verwiesen. Optional umfasst die Markierung eine Linie, einen Pfeil oder ein anderes geeignetes Verbindungsmittel, durch die/den die Markierung mit dem Videosequenzsymbol verbunden ist oder diesem zugeordnet ist.

Es ist besonders bevorzugt, dass einem, mehreren oder jedem Videosequenzsymbol und/oder der/den entsprechenden Markierung/en ein Aufnahmedatum der entsprechenden Videosequenz und/oder ein Zeitzähler der Dauer der Videosequenz zugeordnet ist. Beispielsweise ist das Aufnahmedatum und/oder der Zeitzähler oberhalb, unterhalb oder neben dem Videosequenzsymbol angeordnet. Möglich ist auch, dass das Aufnahmedatum und/oder der Zeitzähler auf der Linie, dem Pfeil oder dem anderen geeigneten Verbindungsmittel angezeigt wird.

Es ist besonders bevorzugt, dass zwei oder mehrere Videosequenzsymbole aneinandergereiht in einer Liste, insbesondere in einer Reihe oder Spalte, angezeigt werden. Optional werden die Videosequenzsymbole früher aufgenommener Videosequenzen weiter oben oder weiter links angezeigt als die Videosequenzsymbole später aufgenommener Videosequenzen.

Eine bevorzugte Umsetzung der Erfindung sieht vor, dass die Videosequenzsymbole der Liste unabhängig von ihrer zeitlichen Einordnung auf dem Zeitstrahl einen einheitlichen Abstand zueinander aufweisen. Alternativ oder optional ergänzend sind die Videosequenzsymbole der Liste unabhängig von ihrer Dauer und/oder unabhängig von ihrem Aufnahmebeginn und Ende auf dem Zeitstrahl in einem einheitlichen Abstand zueinander angeordnet. Besonders bevorzugt ist die Liste jedoch chronologisch, insbesondere entsprechend der Richtung des Zeitstrahls, geordnet.

In einer möglichen Ausgestaltung der Erfindung werden die Liste, die mindestens eine Markierung und der Zeitstrahl zusammen in einer vertikalen oder horizontalen Anordnung angezeigt. Vorzugsweise sind die Liste, die mindestens eine Markierung und der Zeitstrahl parallel zueinander angeordnet. Dies hat insbesondere den Vorteil, dass die Anzeige für den Nutzer übersichtlich, schnell erfassbar und leicht bedienbar bzw. ansteuerbar ist.

In einer bevorzugten Ausführungsform der Erfindung umfasst die Anzeige die mindestens eine Videosequenz, bzw. eine Darstellung der Videosequenz. Vorzugsweise ist diese auf dem Bildschirm abspielbar. Insbesondere wird die Videosequenz als Gesamtbild des Bildschirms abgespielt. Möglich ist auch, dass die Videosequenz als ein Teilbild des Bildschirms abgespielt wird, wobei neben der Videosequenz auch der Zeitstrahl, die Markierung und die Liste angezeigt wird.

Eine erfindungsgemäße Ausgestaltung der Erfindung sieht vor, dass die Benutzerschnittstellenanordnung eine Bedieneinrichtung umfasst, die zur Bedienung und/oder Anwahl der Anzeige, insbesondere Teilbereiche der Anzeige, ausgebildet ist. Vorzugsweise ist die Bedieneinrichtung als eine Tastatur, eine Mouse und/oder als eine berührungsempfindliche Oberfläche ausgebildet. Möglich ist auch, dass die Benutzerschnittstellenanordnung als ein Touch-Screen ausgebildet ist, welcher den Bildschirm und die Bedieneinrichtung umfasst. Insbesondere ist der Touch-Screen zur Ausgabe der Anzeige und zugleich zu deren Bedienung bzw. Ansteuerung durch eine Berührung mit einem oder mehreren Finger ausgebildet. Im speziellen kann die Ansteuerung durch eine Multitouchbewegung mit zwei Fingern zum Zoomen von Bereichen in der Anzeige umgesetzt sein.

In einer bevorzugten Umsetzung der Erfindung ist vorgesehen, dass das mindestens eine Videosequenzsymbol durch die Bedieneinrichtung anwählbar bzw. ansteuerbar ist, sodass die zugeordnete Videosequenz abgespielt wird. Optional ergänzend kann der Nutzer die angezeigten Videosequenzsymbole der Liste mit der Bedieneinrichtung auf dem Gesamtbild verschieben und/oder durch die Videosequenzsymbole scrollen. Insbesondere sind die Videosequenzsymbole der Liste bei der vertikalen Anordnung vertikal und bei der horizontalen Anordnung horizontal verschiebbar. Dies hat den Vorteil, dass der Nutzer innerhalb der Liste intuitiv nach dem gewünschten Videosequenzsymbol suchen kann und die entsprechende Videosequenz zum Abspielen auswählen kann.

Besonders bevorzugt ist, dass der Nutzer den Zeitstrahl verschieben und hinein-/hinauszoomen kann. Bei der Verschiebung wird die Liste der Videosequenzsymbole automatisch in der passenden Scrollgeschwindigkeit mit bewegt, so dass zu den momentan auf oder an dem Zeitstrahl sichtbaren Markierungen die dazugehörigen Videosequenzsymbole auf der Anzeige sichtbar sind. Alternativ oder ergänzend kann auch die Liste der Videosequenzsymbole verschoben werden, wodurch sich in der passenden Geschwindigkeit der Zeitstrahl und die Markierungen mit bewegen. Vorzugsweise weisen die Videosequenzsymbole in der Liste die gleiche Größe auf, unabhängig davon wie weit sie zeitlich auf dem Zeitstrahl auseinander liegen. Beim Verschieben der Liste kann der Zeitstrahl in einer anderen (nicht linearen) Geschwindigkeit mitverschoben werden, um auf der Anzeige zugleich die Markierungen und die zugehörigen Videosequenzsymbole zu zeigen. Das gleiche Verhalten kann bei der Verschiebung des Zeitstrahls umgesetzt werden. Das Zoomen des Zeitstrahls kann insbesondere durch eine Multitouchbewegung umgesetzt werden

In einer erfindungsgemäßen Ausgestaltung der Erfindung umfasst die Anzeige ein erstes Bedienelement. Beispielsweise ist das erste Bedienelement als ein Zeiger, eine Nadel und/oder als ein Schieberegler angezeigt. Das erste Bedienelement ist auf dem Zeitstrahl angeordnet und entlang dessen Längserstreckung verschiebbar. Vorzugsweise zeigt es auf oder in Richtung der Videosequenzsymbole.

Durch das erste Bedienelement ist ein Wiedergabezeitpunkt auf dem Zeitstrahl anwähl- und ansteuerbar, sodass die dem angewählten und/oder angesteuerten Wiedergabezeitpunkt zugeordnete Videosequenz zum ausgewählten Wiedergabezeitpunkt durch eine weitere Befehlseingabe, wie z.B. einen Klick auf das Bedienelement, startet und abgespielt werden kann. Alternativ hierzu wird ein dem Wiedergabezeitpunkt zeitlich entsprechendes Bild der Videosequenz als Standbild auf der Anzeige dargestellt.

Optional umfasst das Bedienelement ein zusätzliches Feld, auf dem der aktuell gewählte Wiedergabezeitpunkt dargestellt ist.

Optional kann die Benutzerschnittstellenanordnung so ausgebildet sein, dass für den Fall, dass der Zeitstrahl oder die Liste der Videosequenzsymbole soweit verschoben wurde, dass das erste Bedienelement aus der Anzeige hinaus wandern würde, das erste Bedienelement randseitig geparkt wird und weiterhin den aktuell ausgewählten Wiedergabezeitpunkt anzeigt. Wird das erste Bedienelement oder die Anzeige des aktuell gewählten Wiederzeitpunkts des ersten Bedienelements durch eine Befehlseingabe, wie z.B. einen Klick, gewählt wird die Zeitleiste und/oder die Liste der Videosequenzsymbole so verschoben, dass das erste Bedienelement zeitlich lagerichtig, z.B. zentriert, auf der Zeitleiste angezeigt wird. Hierdurch kann man schnell wieder zum aktuell gewählten Wiedergabezeitpunkt zurückfinden, wenn man sich durch zoomen/scrollen "verirrt" hat.

Vorzugsweise wird die Liste der Videosequenzsymbole in Abhängigkeit der Position des ersten Bedienelements derart verschoben, dass das erste Bedienelement, eine der Markierungen und ein dazugehöriges Videosequenzsymbol eine Reihe bilden und/oder die Markierung und das dazugehörige Videosequenzsymbol zu dem ersten Bedienelement zentriert ist.

In einer bevorzugten Ausgestaltung der Erfindung umfasst die Anzeige ein zweites, durch die Bedieneinrichtung anwählbares und/oder bedienbares Bedienelement. Das zweites Bedienelement wird beispielsweise als ein Taster, Schalter und/oder als ein Schieberegler auf dem Bildschirm angezeigt. Vorzugsweise ist das zweites Bedienelement zu einer Start-Stopp-Anwahl, zum Springen zwischen den Videosequenzsymbolen der Liste und/oder zum Schnellsuchlauf innerhalb einer abgespielten Videosequenz ausgebildet. Insbesondere kann der Nutzer das zweite Bedienelement alternativ oder ergänzend zur Anwahl und Ansteuerung der Videosequenzsymbole über das erste Bedienelement oder direkt über die Videosequenzsymbole der Liste nutzen.

Ein weiterer Gegenstand der Erfindung betrifft ein Computerprogramm mit den Merkmalen des Anspruchs 13. Insbesondere ist das Computerprogramm ausgebildet, alle Schritte zur bestimmungsgemäßen Anwendung der Benutzerschnittstellenanordnung durchzuführen, wenn das Computerprogramm auf einem Computer oder der Benutzerschnittstellenanordnung abgespielt wird.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine Benutzerschnittstellenanordnung mit einer Steuereinrichtung, einer Bedieneinrichtung und einem Bildschirm mit einer Anzeige;
- Figur 2: die Anzeige aus Fig. 1 mit einem Zeitstrahl, einer ersten Markierung und Videosequenzsymbolen;
- Figur 3: eine alternative Anzeige zur der aus Fig. 2;
- Figur 4: eine weitere Alternative zu den Anzeigen aus Fig. 2 und 3.

Einander entsprechende oder gleiche Teile sind in den Figuren jeweils mit den gleichen Bezugszeichen versehen.

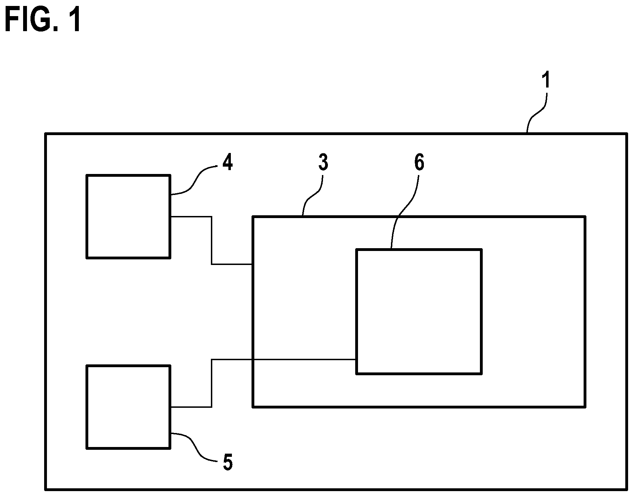

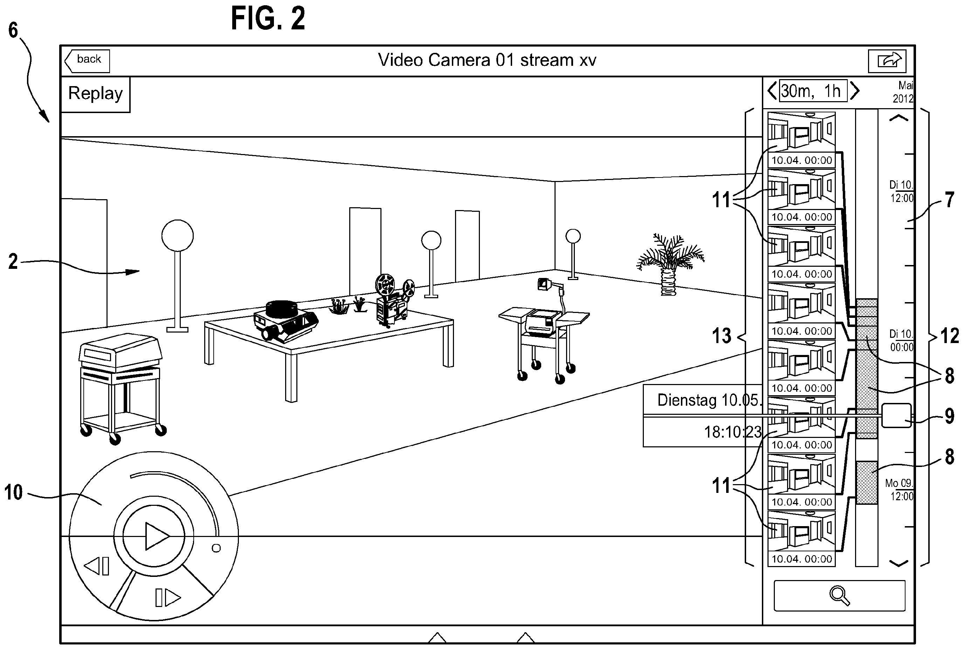

Figur 1 zeigt eine Benutzerschnittstellenanordnung 1 zum Anzeigen und/oder Abspielen von Videosequenzen 2 (Fig. 2). Vorzugsweise sind die Videosequenzen 2 durch mindestens eine Videokamera (nicht dargestellt) aufgezeichnet worden und zeigen ein zeitlich begrenztes Ereignis an.

Die Benutzerschnittstellenanordnung 1 umfasst einen Bildschirm 3, eine Steuereinrichtung 4 und eine Bedieneinrichtung 5. Die Steuereinrichtung 4 steuert den Bildschirm 3 zur Ausgabe einer Anzeige 6 an. Über die Bedieneinrichtung 5 ist die Anzeige 6 durch einen Nutzer anwählbar und/oder ansteuerbar. Die Bedieneinrichtung 5 ist als eine Tastatur, eine Mouse und/oder als eine berührungsempfindliche Oberfläche ausgebildet. Möglich ist, dass die Bedieneinrichtung 5 und/oder die Benutzerschnittstellenanordnung 1 als ein Touchpad oder Touchscreen ausgebildet ist.

Figur 2 zeigt die Anzeige 6, die auf dem Bildschirm 3 als ein Gesamtbild ausgegeben wird. Die Anzeige 6 umfasst die aktuell abgespielte Videosequenz 2, einen vertikal verlaufenden Zeitstrahl 7, mehrere Markierungen 8, ein erstes Bedienelement 9, ein zweites Bedienelement 10 und mehrere Videosequenzsymbole 11. Die Anzahl der angezeigten Markierungen 8 entspricht der Anzahl der angezeigten Videosequenzsymbole 11.

Die verschiedenen durch die Videokamera aufgenommenen Videosequenzen 2 werden durch die Videosequenzsymbole 11 in der Anzeige 6 dargestellt. Insbesondere ist jedem Videosequenzsymbol 11 eine Videosequenz 2 und im Speziellen ein Ereignis zugeordnet. Die Videosequenzsymbole 11 sind untereinander aneinander gereiht und in einer vertikal verlaufenden Liste 13 angeordnet. Die Videosequenzsymbole 11 der Liste weisen unabhängig von der Dauer und/oder eines Aufnahmebeginns und -endes der ihnen zugeordneten Videosequenzen 2 einen einheitlichen Abstand und/oder eine einheitliche Länge innerhalb der Liste 13 auf.

Die Videosequenzsymbole 10 sind als Vorschaubilder ausgebildet, wobei auf jedem Vorschaubild ein Standbild des Ereignisses aus der ihnen zugeordneten Videosequenz 2 gezeigt ist. Unterhalb jedem Videosequenzsymbol 11 ist ein zugehöriges Aufnahmedatum und ein Aufnahmezeitzähler angezeigt.

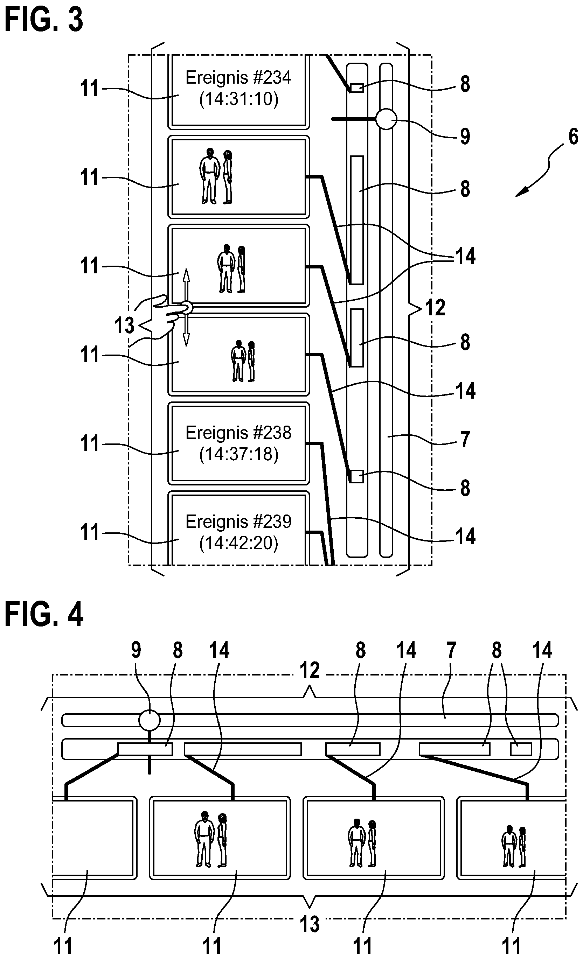

Gemäß Fig. 3 können die Videosequenzsymbole 10 alternativ auch als ein nummerierter Titel oder als eine Beschriftung mit der entsprechenden Aufnahmezeit angezeigt werden.

Mit der Bedieneinrichtung 5 kann der Nutzer die Videosequenzsymbole 10 der Liste 13 nach oben oder unten verschieben bzw. durch diese scrollen. Weiterhin kann der Nutzer das gewünschte Videosequenzsymbol 10 durch die Bedieneinrichtung 5 anwählen und das Abspielen der zugeordneten Videosequenz 2 starten.

Der Zeitstrahl 7 gibt einen Überwachungszeitraum 12 oder einen Teil des Überwachungszeitraums 12 an, innerhalb dem die Videosequenzen 2 aufgenommen werden. Im Beispiel der Fig. 2 umfasst der Überwachungszeitraum 12 einen Zeitraum von 24 Stunden, insbesondere von Montag, 09. Mai 2012, 12:00 Uhr bis Dienstag, 10. Mai 2012, 12:00 Uhr. Innerhalb des Überwachungszeitraums 12 wird ein Ort, insbesondere ein Raum in einem Gebäude, durch die Videokamera überwacht, wobei diese dabei mehrere Videosequenzen 2 aufnimmt.

Das zweite Bedienelement 10 umfasst eine Tasterdarstellung und eine Schiebereglerdarstellung, die durch die Bedieneinrichtung bedienbar und/oder ansteuerbar sind. Durch die Tasterdarstellung kann der Nutzer innerhalb der Liste 13 von einem Videosequenzsymbol 11 zum nächsten vor- oder zurückspringen, das gewünschte Videosequenzsymbol 11 anwählen und dadurch die dem Videosequenzsymbol 11 zugeordnete Videosequenz 2 abspielen. Über die Schiebereglerdarstellung kann der Nutzer einen Schnellsuchlauf innerhalb der Videosequenz 2 durchführen.

Figur 3 zeigt eine alternative Anzeige 6 auf dem Bildschirm 3 der Benutzerschnittstellenanordnung 1. Die alternative Anzeige 6 umfasst den Zeitstrahl 7, die Markierungen 8 und die in der Liste 13 angeordneten Videosequenzsymbole 11, wobei all diese parallel und in vertikaler Anordnung zueinander angezeigt werden.

In einem alternativen Ausführungsbeispiel gemäß Fig. 4 können der Zeitstrahl 7, die Markierungen 8 und die in der Liste 13 angeordneten Videosequenzsymbole 11 auch in horizontaler Anordnung und parallel zueinander angezeigt werden.

Die Markierungen 8 sind zwischen dem Zeitstrahl 7 und den Videosequenzsymbolen 11 der Liste 13 angeordnet und als Balken unterschiedlicher Länge ausgebildet. Jede Markierung 8 ist direkt einem Videosequenzsymbol 11 zugeordnet. Hierzu weist die Markierung 8 eine Verbindungslinie 14 auf, über die sie mit dem ihr zugeordneten Videosequenzsymbol 11 verbunden ist.

Die Markierungen 8 sind dazu ausgebildet, die ihnen durch die Videosequenzsymbole 11 zugeordneten Videosequenzen 2 in Bezug auf den Zeitstrahl 7 zeitlich einzuordnen und die Dauer der Videosequenzen 2 anzugeben. Insbesondere wird durch die Markierungen 8 ein direkter visueller Bezug zwischen den Videosequenzsymbolen 11 und dem Zeitstrahl 7 herstellt. Hierzu verlaufen die Balken parallel zum Zeitstrahl 7 und sind direkt neben diesem angeordnet. Möglich ist auch, dass die Balken auf dem Zeitstrahl 7 angeordnet sind. Durch diese übersichtliche optische Anordnung kann der Nutzer schnell und einfach, insbesondere auf einen Blick, erkennen, wann die einzelnen Videosequenzen 2 im Überwachungszeitraum 12 aufgenommen wurden und wie lange diese dauern.

Die Anzeige 6 umfasst das erste Bedienelement 9, das als eine Nadel oder ein Zeiger ausgebildet ist. Das erste Bedienelement 9 ist auf dem Zeitstrahl 7 angeordnet und entlang diesem durch die Bedieneinrichtung 5 nach oben und unten verschiebbar, um einen aktuellen Wiedergabezeitpunkt festzulegen. Möglich dabei ist, dass der Wochentag, das Datum und/oder die Aufnahmezeit in der Anzeige 6 erscheint (siehe hierzu Fig. 2), wenn die Nadel oder der Zeiger ein Videosequenzsymbol 11 oder eine Markierung 8 berührt bzw. über dieses hinweg verschoben wird.

Durch das Verschieben des ersten Bedienelements 9 auf dem Zeitstrahl 7 kann der Nutzer innerhalb des Überwachungszeitraums 12 den aktuellen Wiedergabezeitpunkt auswählen und nach dem gewünschten Videosequenzsymbol 11 suchen, dieses nachfolgend anwählen und die dem Videosequenzsymbol 11 zugeordnete Videosequenz 2 und zu einer bestimmten Aufnahmezeit starten und abspielen. Somit wird eine direkte Interaktion zwischen dem Zeitstrahl 7 und den durch die Videosequenzsymbole 11 dargestellten Videosequenzen 2 bzw. den in den Videosequenzen 2 gezeigten Ereignissen ermöglicht.

## Patentansprüche

1. Benutzerschnittstellenanordnung (1) zum Anzeigen und/oder Abspielen von Videosequenzen (2), wobei die Videosequenzen (2) jeweils ein Ereignis anzeigen und in einem Überwachungszeitraum (12) aufgenommen sind,
wobei die Benutzerschnittstellenanordnung (1) eine Steuereinrichtung (4) und einen Bildschirm (3) aufweist, wobei die Steuereinrichtung (4) den Bildschirm (3) zur Ausgabe einer Anzeige (6) ansteuert,
wobei die Anzeige (6) einen Zeitstrahl (7) umfasst, der den Überwachungszeitraum (12) oder einen Teil des Überwachungszeitraums (12) angibt,
wobei die Anzeige (6) mindestens eine Markierung (8) zur zeitlichen Einordnung und zur Angabe der Dauer der mindestens einen Videosequenz (2) auf dem Zeitstrahl (7) oder in Bezug auf den Zeitstrahl (7) umfasst,
die Benutzerschnittstellenanordnung eine Bedieneinrichtung (5) umfasst, die zur Bedienung und/oder Anwahl der Anzeige (6) ausgebildet ist,
**dadurch gekennzeichnet, dass**
die Anzeige (6) ein erstes durch die Bedieneinrichtung (5) anwählbares und/oder bedienbares Bedienelement (9) umfasst, das auf dem Zeitstrahl (7) verschiebbar ist und mit dem ein Wiedergabezeitpunkt anwählbar ist.

2. Benutzerschnittstellenanordnung (1) nach Anspruch 1, **dadurch gekennzeichnet, dass** die mindestens eine Markierung (8) als ein Balken oder eine Linie ausgebildet ist, dessen/deren Länge an die Dauer der mindestens eine Videosequenz (2) angepasst ist.

3. Benutzerschnittstellenanordnung (1) nach Anspruch 1 oder 2, **dadurch gekennzeichnet, dass** die Anzeige (6) mindestens ein Videosequenzsymbol (11) umfasst, wobei die mindestens eine Markierung (8) einen visuellen Bezug zwischen dem mindestens einen Videosequenzsymbol (11) und dem Zeitstrahl (7) herstellt.

4. Benutzerschnittstellenanordnung (1) nach Anspruch 3, **dadurch gekennzeichnet, dass** das mindestens eine Videosequenzsymbol (11) als mindestens ein Vorschaubild angezeigt wird.

5. Benutzerschnittstellenanordnung (1) nach Anspruch 3 oder 4, **dadurch gekennzeichnet, dass** zwei oder mehrere Videosequenzsymbole (11) aneinander gereiht in einer Liste (13) angezeigt werden, wobei die Videosequenzsymbole (11) in der Liste (13) unabhängig von ihrer zeitlichen Einordnung auf dem Zeitstrahl (7) einen einheitlichen Abstand zueinander aufweisen.

6. Benutzerschnittstellenanordnung (1) nach Anspruch 5, **dadurch gekennzeichnet, dass** die Liste (13), die mindestens eine Markierung (8) und der Zeitstrahl (7) zusammen in einer vertikalen oder horizontalen Anordnung angezeigt werden und parallel zueinander angeordnet sind.

7. Benutzerschnittstellenanordnung (1) nach einem der vorhergehenden Ansprüche, **dadurch gekennzeichnet, dass** die Anzeige (6) die Videosequenz (2) umfasst, wobei diese auf dem Bildschirm (3) abspielbar ist bzw. abgespielt wird.

8. Benutzerschnittstellenanordnung (1) nach einem der vorhergehenden Ansprüche, **dadurch gekennzeichnet, dass** die Bedieneinrichtung (5) als eine Tastatur, eine Mouse und/oder als eine berührungsempfindliche Oberfläche ausgebildet ist.

9. Benutzerschnittstellenanordnung (1) nach einem der vorhergehenden Ansprüche, **dadurch gekennzeichnet, dass** die Anzeige (6) ein zweites durch die Bedieneinrichtung anwählbares und/oder bedienbares Bedienelement (10) umfasst, das zu einer Start/Stopp-Anwahl, zum Springen zwischen den Videosequenzsymbolen (11) der Liste (13) und/oder zum Schnellsuchlauf innerhalb einer abgespielten Videosequenz (2) ausgebildet ist.

10. Benutzerschnittstellenanordnung nach einem der vorhergehenden Ansprüche, **dadurch gekennzeichnet, dass** diese als ein Computersystem ausgebildet ist.

11. Computerprogramm mit Programm-Codemitteln, um die Anzeige (6) auf dem Bildschirm (3) darzustellen, wenn das Programm auf der Benutzerschnittstellenanordnung (1) nach einem der vorhergehenden Ansprüche ausgeführt wird.

## Claims

1. User interface arrangement (1) for displaying and/or playing back video sequences (2), wherein the video sequences (2) each display an event and are captured in a monitoring period (12),
wherein the user interface arrangement (1) comprises a control device (4) and a screen (3), wherein the control device (4) controls the screen (3) for outputting a display (6),
wherein the display (6) comprises a timeline (7) indicating the monitoring period (12) or a part of the monitoring period (12),
wherein the display (6) comprises at least one marking (8) for temporally classifying and for indicating the duration of the at least one video sequence (2) on the timeline (7) or in relation to the timeline (7), the user interface arrangement comprises an operating device (5) designed for operating and/or selecting the display (6), **characterized in that**
the display (6) comprises a first operating element (9) which is selectable and/or operable by the operating device (5) and which is displaceable on the timeline (7) and by means of which a replay time is selectable.

2. User interface arrangement (1) according to Claim 1, **characterized in that** the at least one marking (8) is embodied as a bar or a line, the length of which is adapted to the duration of the at least one video sequence (2).

3. User interface arrangement (1) according to Claim 1 or 2, **characterized in that** the display (6) comprises at least one video sequence symbol (11) wherein the at least one marking (8) produces a visual relation between the at least one video sequence symbol (11) and the timeline (7).

4. User interface arrangement (1) according to Claim 3, **characterized in that** the at least one video sequence symbol (11) is displayed as at least one preview image.

5. User interface arrangement (1) according to Claim 3 or 4, **characterized in that** two or more video sequence symbols (11) are displayed in a juxtaposed manner in a list (13), wherein the video sequence symbols (11) in the list (13) are at a uniform distance from one another independently of their temporal classification on the timeline (7).

6. User interface arrangement (1) according to Claim 5, **characterized in that** the list (13), the at least one marking (8) and the timeline (7) are displayed together in a vertical or horizontal arrangement and are arranged parallel to one another.

7. User interface arrangement (1) according to any of the preceding claims, **characterized in that** the display (6) comprises the video sequence (2), wherein the latter can be played back or is played back on the screen (3).

8. User interface arrangement (1) according to any of the preceding claims, **characterized in that** the operating device (5) is embodied as a keyboard, a mouse and/or as a touch-sensitive surface.

9. User interface arrangement (1) according to any of the preceding claims, **characterized in that** the display (6) comprises a second operating element (10) which is selectable and/or operable by the operating device and which is designed for a start/stop selection, for jumping between the video sequence symbols (11) of the list (13) and/or for a quick search within a played-back video sequence (2).

10. User interface arrangement according to any of the preceding claims, **characterized in that** said user interface arrangement is embodied as a computer system.

11. Computer program comprising program code means for representing the display (6) on the screen (3) if the program is executed on the user interface arrangement (1) according to any of the preceding claims.

## Revendications

1. Dispositif d'interface utilisateur (1) pour afficher et/ou lire des séquences vidéo (2), dans lequel les séquences vidéo (2) affichent chacune un événement et sont enregistrées dans un intervalle de surveillance (12),
dans lequel le dispositif d'interface utilisateur (1) comprend un dispositif de commande (4) et un écran (3), dans lequel le dispositif de commande (4) commande l'écran (3) pour délivrer un affichage (6),
dans lequel l'affichage (6) comprend une ligne des temps (7) qui indique l'intervalle de surveillance (12) ou une partie de l'intervalle de surveillance (12),
dans lequel l'affichage (6) comprend au moins un marquage (8) pour le classement chronologique et pour indiquer la durée de ladite au moins une séquence vidéo (2) sur la ligne des temps (7) ou par rapport à la ligne des temps (7),
le dispositif d'interface utilisateur comprend un dispositif de manipulation (5) qui est conçu pour manipuler et/ou choisir l'affichage (6),
**caractérisé en ce que**
l'affichage (6) comprend un premier élément de manipulation (9) pouvant être sélectionné et/ou actionné par le dispositif de manipulation (5) et qui peut être déplacé sur la ligne des temps (7) et sélectionné au moyen de l'instant de reproduction.

2. Dispositif d'interface utilisateur (1) selon la revendication 1, **caractérisé en ce que** ledit au moins un marquage (8) est réalisé sous la forme d'une barre ou d'une ligne dont la longueur est adaptée à la durée de ladite au moins une séquence vidéo (2).

3. Dispositif d'interface utilisateur (1) selon la revendication 1 ou 2, **caractérisé en ce que** l'écran (6) comprend au moins un symbole de séquence vidéo (11), dans lequel ledit au moins un marquage (8) établit une référence visuelle entre ledit au moins un symbole de séquence vidéo (11) et la ligne des temps (7).

4. Dispositif d'interface utilisateur (1) selon la revendication 3, **caractérisé en ce que** ledit au moins un symbole de séquence vidéo (11) est affiché sous la forme d'au moins une image de prévisualisation.

5. Dispositif d'interface utilisateur (1) selon la revendication 3 ou 4, **caractérisé en ce que** deux ou plusieurs symboles de séquence vidéo (11) sont affichés l'un après l'autre dans une liste (13), dans lequel les symboles de séquence vidéo (11) de la liste (13) présentent un espacement uniforme les uns des autres indépendamment de leur ordre temporel sur la ligne des temps (7).

6. Dispositif d'interface utilisateur (1) selon la revendication 5, **caractérisé en ce que** la liste (13), ledit au moins un marquage (8) et la ligne des temps (7) sont affichés ensemble dans une disposition verticale ou horizontale et sont disposés parallèlement les uns aux autres.

7. Dispositif d'interface utilisateur (1) selon l'une des revendications précédentes, **caractérisé en ce que** l'affichage (6) comprend la séquence vidéo (2), dans lequel celle-ci peut être reproduite ou est reproduite sur l'écran (3).

8. Dispositif d'interface utilisateur (1) selon l'une des revendications précédentes, **caractérisé en ce que** le dispositif de manipulation (5) est réalisé sous la forme d'un clavier, d'une souris et/ou d'une surface tactile.

9. Dispositif d'interface utilisateur (1) selon l'une des revendications précédentes, **caractérisé en ce que** l'écran (6) comprend un deuxième élément de manipulation (10) qui peut être sélectionné et/ou manipulé par le dispositif de manipulation et qui est conçu pour la sélection marche/arrêt, pour effectuer des sauts entre les symboles de séquence vidéo (11) de la liste (13) et/ou pour effectuer une recherche rapide dans une séquence vidéo (2) lue.

10. Dispositif d'interface utilisateur selon l'une des revendications précédentes, **caractérisé en ce qu'**il est réalisé sous la forme d'un système informatique.

11. Programme d'ordinateur comprenant des moyens à code de programme destinés à représenter l'affichage (6) sur l'écran (3) lorsque le programme est exécuté sur le dispositif d'interface utilisateur (1) selon l'une des revendications précédentes.
